# EUROPÄISCHE PATENTANMELDUNG

(11) **EP 3 798 751 A1**
(43) Veröffentlichungstag der Anmeldung: **31.03.2021**
(21) Anmeldenummer: 19199436.7
(22) Anmeldetag: 25.09.2019
(51) Int. Cl.: G05B 19/042, G05B 19/05

(54) **SICHERHEITSSYSTEM**

(71) Anmelder: Leuze electronic GmbH + Co. KG, 73277 Owen/Teck (DE)
(72) Erfinder: Tkach, Gennady, 81373 München (DE); Heckmayr, Alexander, 86807 Buchloe (DE); Sillge, Ray, 80995 München (DE); Feller, Bernhard, 86316 Friedberg (DE)
(74) Vertreter: Ruckh, Rainer Gerhard

(57) **Zusammenfassung**

Die Erfindung betrifft ein Sicherheitssystem (1) mit wenigstens einem Ein-/Ausgang (4), welcher als Eingang oder Ausgang konfigurierbar ist, mit einer Steuer- und Auswerteeinheit (2), welche zur Auswertung und/oder Vorgabe von Signalzuständen des Ein-/Ausgangs (4) ausgebildet ist. Ein von der Steuer- und Auswerteeinheit (2) angesteuertes Schaltelement (8) ist zur Vorgabe der Konfiguration des Ein-/Ausgangs (4) vorgesehen. Weiterhin sind Mittel zur Funktionsprüfung des Schaltelements (8) vorgesehen, welche ein Entkopplungselement (11) und einen dem Entkopplungselement (11) nachgeordneten Pegelwandler (12) aufweisen. Bei einer Entkopplung des Schaltelements (8) von dem Ein-/Ausgang (4) durch das Entkopplungselement (11) ist ein Defekt des Schaltelements (8) dadurch feststellbar, dass das Ausgangssignal des Schaltelements (8) über den Pegelwandler (12) in die Steuer- und Auswerteeinheit (2) rückgelesen und dort bewertet wird.

## Beschreibung

Die Erfindung betrifft ein Sicherheitssystem.

Ein derartiges Sicherheitssystem kann beispielsweise von einem Sicherheitssensor gebildet sein. Derartige Sicherheitssensoren werden im Bereich der Sicherheitstechnik, insbesondere von Gefahrenbereichsüberwachung an Maschinen, Anlagen und Fahrzeugen eingesetzt.

Weiterhin kann das Sicherheitssystem von einem Schaltgerät gebildet sein. Das Schaltgerät kann beispielsweise die Funktion einer Sicherheitssteuerung übernehmen, die zum Beispiel in Abhängigkeit von Sensorsignalen von Sicherheitssensoren eine Maschine, Anlage oder ein Fahrzeug steuert.

Zur Erfüllung der sicherheitstechnischen Anforderungen muss das Sicherheitssystem einen fehlersicheren Aufbau aufweisen. Dies gilt insbesondere für die Schnittstelle des Sicherheitssystems zu externen Einheiten, die insbesondere aus einer Anordnung von Ein-/Ausgängen bestehen kann, die wahlweise als Eingänge oder Ausgänge konfiguriert werden können.

Bei derartigen Ein-/Ausgängen können insbesondere Kurzschlüsse zu Fehlfunktionen führen.

Der Erfindung liegt die Aufgabe zugrunde ein Sicherheitssystem bereitzustellen, welches eine für den Einsatz im Bereich der Sicherheitstechnik ausreichende Fehlersicherheit aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft ein Sicherheitssystem mit wenigstens einem Ein-/Ausgang, welcher als Eingang oder Ausgang konfigurierbar ist, und mit einer Steuer- und Auswerteeinheit, welche zur Auswertung und/oder Vorgabe von Signalzuständen des Ein-/Ausgangs ausgebildet ist. Ein von der Steuer- und Auswerteeinheit angesteuertes Schaltelement ist zur Vorgabe der Konfiguration des Ein-/Ausgangs vorgesehen. Mittel zur Funktionsprüfung des Schaltelements sind vorgesehen, welche ein Entkopplungselement und einen dem Entkopplungselement nachgeordneten Pegelwandler aufweisen. Bei einer Entkopplung des Schaltelements von dem Ein-/Ausgang durch das Entkopplungselement ist ein Defekt des Schaltelements dadurch feststellbar, dass das Ausgangssignal des Schaltelements über den Pegelwandler in die Steuer- und Auswerteeinheit rückgelesen und dort bewertet wird.

Bei dem erfindungsgemäßen Sicherheitssystem ist eine flexible Schnittstelle für eine Kommunikation mit externen Einheiten dadurch realisiert, dass wenigstens ein Ein-/Ausgang vorgesehen ist, der wahlweise als Eingang oder Ausgang betrieben werden kann, sodass über diesen Eingangssignale in die Steuer- und Auswerteeinheit des Sicherheitssystems eingelesen und auch in der Steuer- und Auswerteeinheit generierte Ausgangssignale über diesen ausgegeben werden können.

Um die Konfiguration des Ein-/Ausgangs als Eingang oder Ausgang vorzugeben, ist ein von der Steuer- und Auswerteeinheit gesteuertes Schaltelement vorgesehen. Die Vorgabe der Konfiguration des Ein-/Ausgangs kann somit mit einem äußerst geringen Schaltaufwand realisiert werden.

Ein wesentlicher Aspekt der Erfindung besteht darin, dass Mittel zur Funktionsprüfung des Schaltelements vorgesehen sind. Durch die Funktionsprüfung des Schaltelements kann bereits eine ausreichende Fehlersicherheit des Ein-/Ausgangs erzielt werden, indem Fehler des Schaltelements, insbesondere Kurzschlüsse des Schaltelements, aufgedeckt werden können.

Zur Funktionsprüfung des Schaltelements wird im einfachsten Fall nur ein Entkopplungselement, mit dem eine Entkopplung des Schaltelements vom Ein-/Ausgang möglich ist, und ein Pegelwandler, der dem Entkopplungselement nachgeordnet ist, benötigt. Damit werden zur Durchführung der Funktionsprüfung nur wenig Bauteile benötigt, das heißt der konstruktive Aufwand für die Funktionsprüfung ist äußerst gering.

Die Funktionsprüfung des Schaltelements erfolgt dabei derart, dass bei einer Entkopplung des Schaltelements von dem Ein-/Ausgang durch das Entkopplungselement ein Defekt des Schaltelements dadurch feststellbar wird, dass das Ausgangssignal des Schaltelements über den Pegelwandler in die Steuer- und Auswerteeinheit rückgelesen und dort bewertet wird.

Die gesamte Funktionsprüfung wird damit von der Steuer- und Auswerteeinheit gesteuert, indem sie geeignete Signale für das Schaltelement vorgibt und dessen Reaktion durch das Rücklesen der Ausgangssignale über den Pegelwandler prüft, um anhand dessen Fehlfunktionen des Schaltelements aufdecken zu können.

Die Steuer- und Auswerteeinheit gibt dabei die Zeitintervalle vor, innerhalb der die Funktionsprüfung durchgeführt werden, wobei diese vorteilhaft fortlaufend in vorgegebenen Zeitabständen durchgeführt werden.

Besonders vorteilhaft werden in der Steuer- und Auswerteeinheit Signale generiert, die an das oder ein Schaltelement ausgegeben werden. Durch ein Rücklesen der Signale in die Steuer- und Auswerteeinheit erfolgt eine Fehlererkennung.

Vorteilhaft sind die Signale in Form von Impulsen gebildet, deren Impulsdauern so kurz sind, dass diese die Ein-/Ausgangsbeschaltung nicht ändern, das heißt angeschlossene externe Einheiten die kurzzeitigen Signaländerungen am Ein-/Ausgang nicht registrieren, da diese ausgefiltert werden.

Derartige Signale können von der Steuer- und Auswerteeinheit zur Funktionsprüfung unabhängig davon, ob der Ein-/Ausgang als Eingang oder Ausgang betrieben wird, dem Schaltelement zugeführt werden, sodass eine umfassende Funktionsprüfung gewährleistet ist.

Mit dieser Funktionsprüfung können insbesondere Kurzschlüsse des Schaltelements aufgedeckt werden.

Weiter vorteilhaft kann die Funktionsprüfung auch auf eine Fehlerprüfung des Entkopplungselements erweitert sein. Bei einem Betrieb des dem Schaltelement zugeordneten Ein-/Ausgangs als Eingang ist ein Kurzschluss des Entkopplungselements aufdeckbar, wenn der Eingang aktiv ist.

Generell wird bei einem Betrieb des Ein-/Ausgangs als Eingang der dort anstehende Signalzustand mittels eines weiteren Pegelwandlers ermittelt und der Steuer- und Auswerteeinheit zugeführt.

Mit der erfindungsgemäßen Funktionsprüfung wird ein wesentlicher Beitrag für eine fehlersichere Ausbildung des Sicherheitssystems geleistet, was eine wesentliche Voraussetzung für den Einsatz des Sicherheitssystems in sicherheitstechnischen Applikationen ist.

Um diese Anforderungen noch weitergehend zu erfüllen, ist die Steuer- und Auswerteeinheit mehrkanalig ausgebildet.

Dabei ist jeder Kanal der Steuer- und Auswerteeinheit von einer Rechnereinheit gebildet.

Bei einer mehrkanalig ausgebildeten Steuer- und Auswerteeinheit ist eine der Anzahl der Kanäle der Steuer- und Auswerteeinheit entsprechende Anzahl von dem Entkopplungselement nachgeordneten Pegelwandlern vorgesehen, wobei mittels jedes Pegelwandlers das Ausgangssignal des Schaltelements in einen Kanal der Steuer- und Auswerteeinheit rückgelesen wird.

Auf diese Weise ist die mehrkanalige Ausbildung der Steuer- und Auswerteeinheit in die erfindungsgemäße Funktionsprüfung eingebunden.

Gemäß einer vorteilhaften Weiterbildung der Erfindung weist das Sicherheitssystem mehrere Ein-/Ausgänge auf, wobei jedem Ein-/Ausgang ein Schaltelement zugeordnet ist, welchem jeweils Mittel zur Funktionsprüfung zugeordnet sind.

Zweckmäßig sind über den oder jeden als Eingang betriebenen Ein-/Ausgang binäre Eingangssignale eingebbar.

Die Eingänge können beispielsweise für eine Betriebsartenauswahl oder ein Muting, das heißt eine Überbrückung von Sicherheitsfunktionen von Sicherheitssensoren genutzt werden.

Die Auswertung der über die Eingänge eingelesenen Signale ermöglicht eine weitere Fehlerkontrolle, wodurch ein weiterer Beitrag zur Fehlersicherheit des Sicherheitssystems geleistet wird.

So können in der Steuer- und Auswerteeinheit die Eingangssignale von Ein-/Ausgängen hinsichtlich ihrer Codierung überprüft werden.

Weiterhin können in der Steuer- und Auswerteeinheit die Eingangssignale von Ein-/Ausgängen hinsichtlich ihres Zeitverhaltens überprüft werden.

Besonders vorteilhaft wird für eine Fehlerkontrolle in der Steuer- und Auswerteeinheit eine logische und/oder zeitliche Korrelation von Eingangssignalen verschiedener Ein-/Ausgänge überprüft.

Insbesondere sind durch einen Vergleich von Eingangssignalen unterschiedlicher Ein-/Ausgänge in der Steuer- und Auswerteeinheit Kurzschlüsse aufdeckbar.

Gemäß einer ersten Variante der Erfindung ist das Sicherheitssystem von einem Sicherheitssensor gebildet.

Der Sicherheitssensor kann insbesondere zur Gefahrenbereichsüberwachung an Maschinen, Anlagen, Fahrzeugen und dergleichen eingesetzt werden. Mit dem Sicherheitssensor können dann gefahrbringende Objekteingriffe in einem Gefahrenbereich erkannt werden. Der Sicherheitssensor generiert abhängig von diesen Objektdetektionen ein Schaltsignal, das zur Steuerung der Maschine, Anlage oder des Fahrzeugs verwendet wird.

Vorteilhaft ist der Sicherheitssensor ein optischer Sensor oder ein Radarsensor.

Prinzipiell kann der Sicherheitssensor auch als Ultraschallsensor oder dergleichen gebildet sein.

Gemäß einer ersten Ausgestaltung arbeitet der Sicherheitssensor nach dem Lichtschrankenprinzip.

Der Sicherheitssensor kann dann eine Lichtschranke oder ein Lichtvorhang sein.

Weiterhin kann der Sicherheitssensor ein tastender Sensor sein.

Insbesondere kann der Sicherheitssensor ein Distanzsensor sein.

Beispielsweise ist der Sicherheitssensor eine TOF-Kamera oder ein Flächendistanzsensor.

Schließlich kann der Sicherheitssensor ein stereoskopischer oder mustererkennender Kamerasensor sein.

Gemäß einer zweiten Variante der Erfindung ist das Sicherheitssystem als Schaltgerät ausgebildet. Das Schaltgerät kann beispielsweise Sensorsignale von Sicherheitssensoren verknüpfen. Weiterhin kann das Sicherheitssystem eine Sicherheitssteuerung sein.

Gemäß einer konstruktiv vorteilhaften Ausgestaltung weist das oder jedes Schaltelement einen Transistor auf.

Weiter vorteilhaft ist das oder jedes Entkopplungselement eine Diode, ein Transistor, ein Widerstand, eine Induktivität oder eine Kombination hiervon.

Schließlich kann der oder jeder Pegelwandler von einem ohmschen Spannungsteiler oder von einer Kombination einer Konstantstromquelle mit einem Widerstand gebildet sein.

Die Erfindung wird im Folgenden anhand der Zeichnungen erläutert. Es zeigen:
- Figur 1:: Ausführungsbeispiel eines Sicherheitssystems mit einer einkanaligen Steuer- und Auswerteeinheit und einem Ein-/Ausgang.
- Figur 2:: Erweiterung der Ausführungsform gemäß Figur 1 auf zwei Ein-/Ausgänge.
- Figur 3:: Tabelle mit Signalwerten der Ein-/Ausgänge des Sicherheitssystems gemäß Figur 2.
- Figur 4:: Ausführungsbeispiel eines Sicherheitssystem mit einer zweikanaligen Steuer- und Auswerteeinheit und einem Ein-/Ausgang.
- Figur 5:: Tabelle von Signalwerten für das Sicherheitssystem gemäß Figur 4.

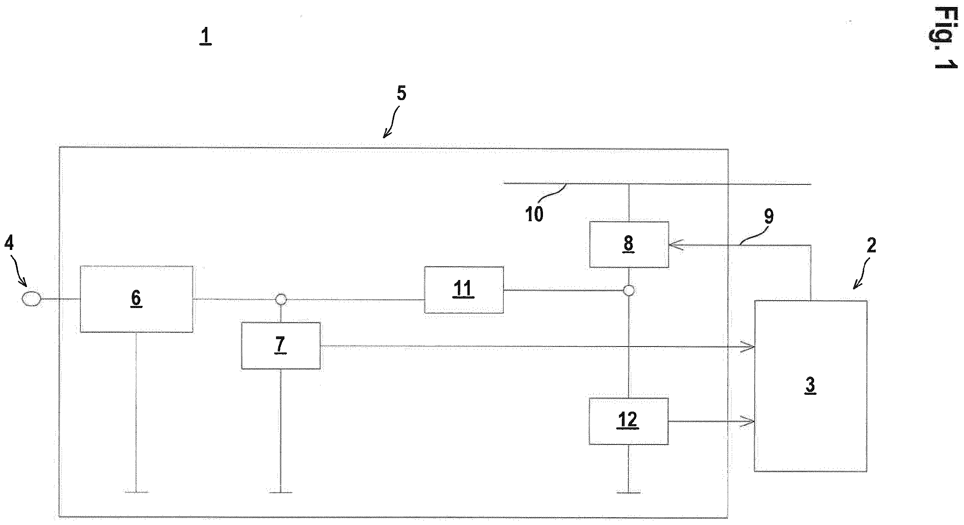

Figur 1 zeigt ein Ausführungsbeispiel eines Sicherheitssystems 1. Das Sicherheitssystem 1 kann prinzipiell von einem Schaltgerät gebildet sein. Im vorliegenden Fall ist das Sicherheitssystem 1 als Sicherheitssensor ausgebildet.

Der Sicherheitssensor weist im vorliegenden Fall eine einkanalig ausgebildete Steuer- und Auswerteeinheit 2 auf, die von einer Rechnereinheit 3 gebildet ist.

An die Steuer- und Auswerteeinheit 2 sind nicht dargestellte Sensorkomponenten angeschlossen, die zur Erfassung von Objekten dienen. In Abhängigkeit von Sensorsignalen der Sensorkomponenten wird in der Steuer- und Auswerteeinheit 2 ein Objektfeststellungssignal generiert. Im vorliegenden Fall ist der Sicherheitssensor von einem optischen Sensor in Form eines Lichtvorhangs gebildet. In diesem Fall wird in der Steuer- und Auswerteeinheit 2 als Objektfeststellungssignal ein binäres Schaltsignal generiert, dessen Schaltzustände angeben, ob sich ein Objekt in einem Gefahrenbereich befindet oder nicht. Das Schaltsignal des Sicherheitssensor wird zum Beispiel an eine Steuerung einer Anlage ausgegeben, von der gefahrbringende Bewegungen ausgehen können.

Der Sicherheitssensor weist einen Ein-/Ausgang 4 auf, der über die Steuer- und Auswerteeinheit 2 und eine Ansteuerschaltung 5 wahlweise als Eingang oder Ausgang konfiguriert werden kann.

Die Ansteuerschaltung 5 weist eine dem Ein-/Ausgang 4 nachgeordnete EMV-Beschaltung 6 und einen ersten Pegelwandler 7 auf. Bei Konfiguration als Eingang wird das dort anstehende Eingangssignal über den Pegelwandler 7 der Steuer- und Auswerteeinheit 2 zugeführt. Der Pegelwandler 7 ist als ohmscher Spannungsteiler ausgebildet.

Die Ansteuerschaltung 5 umfasst weiterhin ein Schaltelement 8, das über eine Steuerleitung 9 von der Steuer- und Auswerteeinheit 2 angesteuert wird und an einer Versorgungsspannung 10 liegt. Das Schaltelement 8 besteht aus einem Transistor oder weist einen Transistor auf.

Weiterhin ist zwischen dem Ein-/Ausgang 4 und dem Schaltelement 8 ein Entkopplungselement 11 vorgesehen, das im vorliegenden Fall aus einer Diode besteht.

Ein dem Entkopplungselement 11 nachgeordneter weiterer Pegelwandler 12 dient zum Rücklesen des Ausgangssignals des Schaltelements 8 in die Steuer- und Auswerteeinheit 2. Auch dieser Pegelwandler 12 ist als ohmscher Spannungsteiler ausgebildet.

Abhängig von den Schalterstellungen des Schaltelements 8 wird der Ein-/Ausgang 4 als Eingang oder Ausgang betrieben. Ist das Schaltelement 8 offen (unbestromt), kann der Ein-/Ausgang 4 als Eingang verwendet werden, wobei über den Eingang binäre Eingangssignale eingelesen werden können. Wird das Schaltelement 8 als Ausgang betrieben, kann das Schaltelement 8 geschlossen sein, sodass der Ausgang aktiv ist. Weiterhin kann das Schaltelement 8 offen sein, sodass der Ausgang inaktiv ist. Damit können binäre Ausgangssignale über das Schaltelement 8 ausgegeben werden.

Bei der Funktionsprüfung ist der Ein-/Ausgang 4 mittels des Entkopplungselements 11 vom Schaltelement 8 entkoppelt und die Ausgangssignale des Pegelwandlers 12 werden der Steuer- und Auswerteeinheit 2 zugeführt.

Zur Funktionsprüfung des Schaltelements 8 werden in der Steuer- und Auswerteeinheit 2 Testsignale generiert, die an das oder ein Schaltelement 8 ausgegeben werden. Durch ein Rücklesen der Testsignale in die Steuer- und Auswerteeinheit 2 erfolgt eine Fehlererkennung.

Damit können Kurzschlüsse des Schaltelements 8 erkannt werden. Bei einem Betrieb des dem Schaltelement 8 zugeordneten Ein-/Ausgangs 4 als Eingang ist ein Kurzschluss des Entkopplungselements 11 aufdeckbar, wenn der Eingang aktiv ist.

Vorteilhaft sind die Testsignale als Testimpulse ausgebildet, die so kurz sind, dass diese von einer an das Sicherheitssystem 1 angeschlossenen externen Einheit nicht registriert werden.

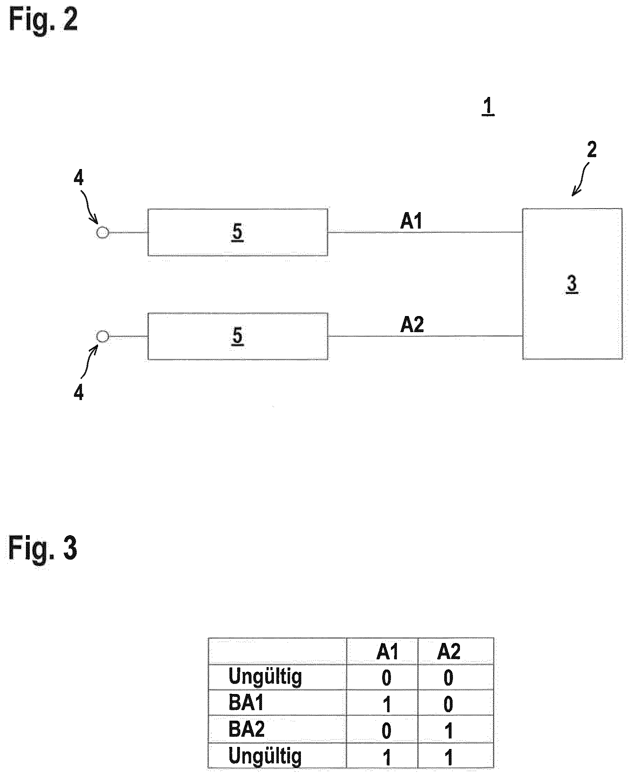

Figur 2 zeigt eine Erweiterung des Sicherheitssystems 1 gemäß Figur 1 dahingehend, dass zwei Ein-/Ausgänge 4 vorgesehen sind. Natürlich sind auch Sicherheitssysteme 1 mit mehr als zwei Ein-/Ausgänge 4 vorgesehen. Jeder Ein-/Ausgang 4 ist über eine Ansteuerschaltung 5 gemäß Figur 1 an die Steuer- und Auswerteeinheit 2 angekoppelt. Bei Betrieb der Ein-/Ausgänge 4 als Eingänge werden, wie Figur 2 zeigt, über einen ersten Eingang Eingangssignale A1 und über einen zweiten Eingang Eingangssignale A2 an die Steuer- und Auswerteeinheit 2 eingelesen werden.

Die Eingänge sind als sicherheitsrelevante Eingänge ausgebildet, über welche eine Betriebsartenauswahl oder insbesondere eine Vorgabe eines Mutings für den als Lichtvorhang ausgebildeten Sicherheitssensor erfolgen kann.

Im vorliegenden Fall erfolgt mit den Eingangssignalen A1, A2 eine Auswahl zwischen zwei Betriebsarten BA1, BA2, wie die Tabelle von Figur 3 zeigt. Eine gültige Betriebsartenauswahl liegt vor, wenn die Eingangssignale A1, A2 unterschiedlich sind. Sind die Eingangssignale A1, A2 gleich, liegt ein Fehler, insbesondere ein Kurzschluss eines Schaltelements 8 gegen Masse oder Versorgungsspannung 10 vor, was in der Steuer- und Auswerteeinheit 2 erkannt wird.

Generell werden für eine Fehlerkontrolle in der Steuer- und Auswerteeinheit 2 eine logische und/oder zeitliche Korrelation von Eingangssignalen verschiedener Ein-/Ausgänge 4 überprüft.

Insbesondere sind durch einen Vergleich von Eingangssignalen unterschiedlicher Ein-/Ausgänge 4 in der Steuer- und Auswerteeinheit 2 Kurzschlüsse aufdeckbar.

Dabei werden in der Steuer- und Auswerteeinheit 2 auch die Eingangssignale der Ein-/Ausgänge 4 einzeln geprüft.

Insbesondere werden in der Steuer- und Auswerteeinheit 2 die Eingangssignale von Ein-/Ausgängen 4 hinsichtlich ihrer Codierung überprüft.

Weiterhin werden in der Steuer- und Auswerteeinheit 2 die Eingangssignale von Ein-/Ausgängen 4 hinsichtlich ihres Zeitverhaltens überprüft.

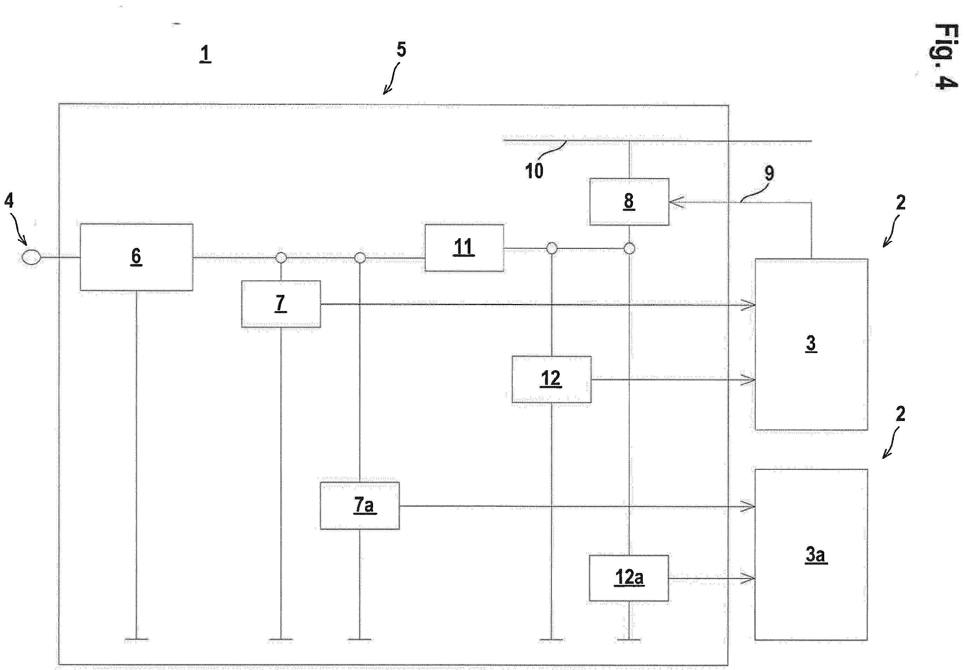

Figur 4 zeigt eine Ausführungsform des Sicherheitssystems 1 mit einem Ein-/Ausgang 4 und einer zweikanaligen Steuer- und Auswerteeinheit 2, wobei die Kanäle der Steuer- und Auswerteeinheit 2 jeweils von einer Rechnereinheit 3, 3a gebildet sind.

Dementsprechend sind dem Ein-/Ausgang 4 zwei vorzugsweise identische Pegelwandler 7, 7a vorgesehen, mit den bei Betrieb des Ein-/Ausgangs 4 als Eingang Eingangssignale bei den Rechnereinheiten 3, 3a zugeführt werden. Ebenso sind dem Schaltelement 8 zwei vorzugsweise identische Pegelwandler 12, 12a nachgeordnet, wobei der erste Pegelwandler 12 mit der ersten Rechnereinheit 3 und der zweite Pegelwandler 12a mit der zweiten Rechnereinheit 3a verbunden ist.

Zur Funktionsprüfung des Schaltelements 8 werden diesem wieder von der Steuer- und Auswerteeinheit 2 über die Steuerleitung 9 Signale dem Schaltelement 8 zugeführt, wobei die dabei am Ausgang des Steuerelements 8 anstehenden Ausgangssignale bei durch das Entkopplungselement 11 bewirkter Entkopplung vom Ein-/Ausgang 4 über die Pegelwandler 12, 12a in eine Rechnereinheit 3, 3a rückgelesen sind und dort bewertet werden.

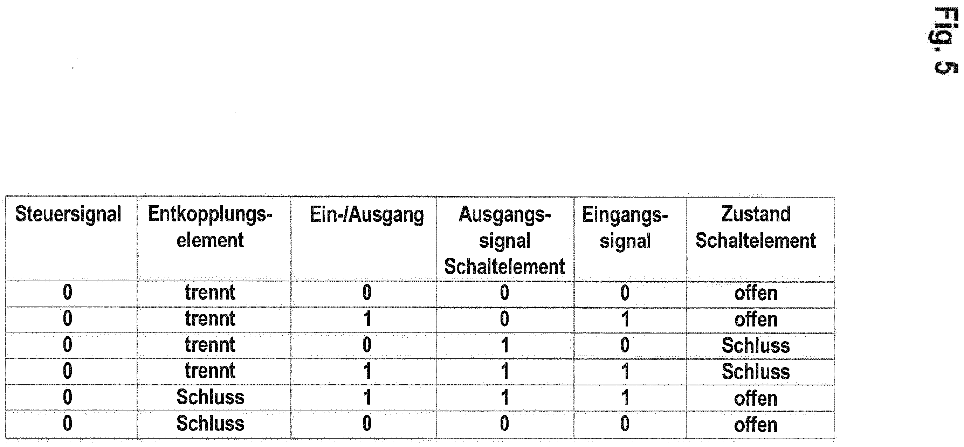

Eine derartige Funktionsprüfung ist in der Tabelle gemäß Figur 5 beschrieben. In dieser Tabelle sind folgende Signale enthalten.
- Steuersignal, das von der Steuer- und Auswerteeinheit 2 dem Schaltelement 8 zugeführt wird
- Signal des Entkopplungselements 11
- Signal an den als Eingang betriebenen Ein-/Ausgang 4
- Signal am Ausgang des Schaltelements 8
- Eingangssignal am Pegelwandler 7
- Zustand des Schaltelements 8

Durch die so durchgeführte Funktionsprüfung kann ein Kurzschluss (Schluss) des Schaltelements 8 aufgedeckt werden.

Weiterhin können auch Kurzschlüsse (Schlüsse) des Entkopplungselements 11 aufgedeckt werden. Dabei ist mit der Anordnung gemäß Figur 4 allein jedoch nur dann eine Kurzschluss-Aufdeckung möglich, wenn der Eingang aktiv ist. Ist der Eingang inaktiv, werden zusätzliche Maßnahmen benötigt, wie zum Beispiel die Verwendung codierter Eingangssignale oder eine Erweiterung des Entkopplungselements 11 auf mehrere Dioden.

### Bezugszeichenliste

- (1): Sicherheitssystem
- (2): Steuer- und Auswerteeinheit
- (3, 3a): Rechnereinheit
- (4): Ein-/Ausgang
- (5): Ansteuerschaltung
- (6): EMV-Beschaltung
- (7,7a): Pegelwandler
- (8): Schaltelement
- (9): Steuerleitung
- (10): Versorgungsspannung
- (11): Entkopplungselement
- (12, 12a): Pegelwandler

- A1, A2: Eingangssignal
- BA1, BA2: Betriebsart

## Patentansprüche

1. Sicherheitssystem (1) mit wenigstens einem Ein-/Ausgang (4), welcher als Eingang oder Ausgang konfigurierbar ist, mit einer Steuer- und Auswerteeinheit (2), welche zur Auswertung und/oder Vorgabe von Signalzuständen des Ein-/Ausgangs (4) ausgebildet ist, **dadurch gekennzeichnet, dass** ein von der Steuer- und Auswerteeinheit (2) angesteuertes Schaltelement (8) zur Vorgabe der Konfiguration des Ein-/Ausgangs (4) vorgesehen ist, dass Mittel zur Funktionsprüfung des Schaltelements (8) vorgesehen sind, welche ein Entkopplungselement (11) und einen dem Entkopplungselement (11) nachgeordneten Pegelwandler (12) aufweisen, wobei bei einer Entkopplung des Schaltelements (8) von dem Ein-/Ausgang (4) durch das Entkopplungselement (11) ein Defekt des Schaltelements (8) dadurch feststellbar ist, dass das Ausgangssignal des Schaltelements (8) über den Pegelwandler (12) in die Steuer- und Auswerteeinheit (2) rückgelesen und dort bewertet wird.

2. Sicherheitssystem (1) nach Anspruch 1, **dadurch gekennzeichnet, dass** ein Pegelwandler (7, 7a) zur Ermittlung des Signalzustands des als Eingang konfigurierten Ein-/Ausgangs (4) vorgesehen ist.

3. Sicherheitssystem (1) nach einem der Ansprüche 1 oder 2, **dadurch gekennzeichnet, dass** die Steuer- und Auswerteeinheit (2) mehrkanalig ausgebildet ist.

4. Sicherheitssystem (1) nach Anspruch 3, **dadurch gekennzeichnet, dass** jeder Kanal der Steuer- und Auswerteeinheit (2) von einer Rechnereinheit (3, 3a) gebildet ist.

5. Sicherheitssystem (1) nach einem der Ansprüche 3 oder 4, **dadurch gekennzeichnet, dass** bei einer mehrkanalig ausgebildeten Steuer- und Auswerteeinheit (2) eine der Anzahl der Kanäle der Steuer- und Auswerteeinheit (2) entsprechende Anzahl von dem Entkopplungselement (11) nachgeordneten Pegelwandlern (12, 12a) vorgesehen ist, wobei mittels jedes Pegelwandlers (12, 12a) das Ausgangssignal des Schaltelements (8) in einen Kanal der Steuer- und Auswerteeinheit (2) rückgelesen wird.

6. Sicherheitssystem (1) nach einem der Ansprüche 1 - 5, **dadurch gekennzeichnet, dass** dieses mehrere Ein-/Ausgänge (4) aufweist, wobei jedem Ein-/Ausgang (4) ein Schaltelement (8) zugeordnet ist, welchem jeweils Mittel zur Funktionsprüfung zugeordnet sind.

7. Sicherheitssystem (1) nach Anspruch 6, **dadurch gekennzeichnet, dass** über als Eingänge betriebene Ein-/Ausgänge (4) eingegebene Eingangssignale eine Betriebsartenauswahl durchführbar ist.

8. Sicherheitssystem (1) nach einem der Ansprüche 6 oder 7, **dadurch gekennzeichnet, dass** über als Eingänge betriebene Ein-/Ausgänge (4) eingegebene Eingangssignale ein Muting durchführbar ist.

9. Sicherheitssystem (1) nach einem der Ansprüche 1 - 8, **dadurch gekennzeichnet, dass** über den oder jeden als Eingang betriebenen Ein-/Ausgang (4) binäre Eingangssignale eingebbar sind.

10. Sicherheitssystem (1) nach einem der Ansprüche 1 - 9, **dadurch gekennzeichnet, dass** in der Steuer- und Auswerteeinheit (2) die Eingangssignale von Ein-/Ausgängen (4) hinsichtlich ihrer Codierung überprüft werden.

11. Sicherheitssystem (1) nach einem der Ansprüche 1 - 10, **dadurch gekennzeichnet, dass** in der Steuer- und Auswerteeinheit (2) die Eingangssignale von Ein-/Ausgängen (4) hinsichtlich ihres Zeitverhaltens überprüft werden.

12. Sicherheitssystem (1) nach einem der Ansprüche 1 - 11, **dadurch gekennzeichnet, dass** für eine Fehlerkontrolle in der Steuer- und Auswerteeinheit (2) eine logische und/oder zeitliche Korrelation von Eingangssignalen verschiedener Ein-/Ausgänge (4) überprüft wird.

13. Sicherheitssystem (1) nach Anspruch 12, **dadurch gekennzeichnet, dass** durch einen Vergleich von Eingangssignalen unterschiedlicher Ein-/Ausgänge (4) in der Steuer- und Auswerteeinheit (2) Kurzschlüsse aufdeckbar sind.

14. Sicherheitssystem (1) nach einem der Ansprüche 1 - 13, **dadurch gekennzeichnet, dass** in der Steuer- und Auswerteeinheit (2) Signale generiert werden, die an das oder ein Schaltelement (8) ausgegeben werden, wobei durch ein Rücklesen der Signale in die Steuer- und Auswerteeinheit (2) eine Fehlererkennung erfolgt.

15. Sicherheitssystem (1) nach Anspruch 14, **dadurch gekennzeichnet, dass** Kurzschlüsse des Schaltelements (8) erkannt werden.

16. Sicherheitssystem (1) nach einem der Ansprüche 14 oder 15, **dadurch gekennzeichnet, dass** bei einem Betrieb des dem Schaltelement (8) zugeordneten Ein-/Ausgangs (4) als Eingang ein Kurzschluss des Entkopplungselements (11) aufdeckbar ist, wenn der Eingang aktiv ist.

17. Sicherheitssystem (1) nach einem der Ansprüche 1 - 16, **dadurch gekennzeichnet, dass** dieses ein Sicherheitssensor ist.

18. Sicherheitssystem (1) nach einem der Ansprüche 1 - 17, **dadurch gekennzeichnet, dass** der Sicherheitssensor ein optischer Sensor oder ein Radarsensor ist.

19. Sicherheitssystem (1) nach einem der Ansprüche 17 oder 18, **dadurch gekennzeichnet, dass** der Sicherheitssensor nach dem Lichtschrankenprinzip arbeitet.

20. Sicherheitssystem (1) nach einem der Ansprüche 17 oder 18, **dadurch gekennzeichnet, dass** der Sicherheitssensor ein tastender Sensor ist.

21. Sicherheitssystem (1) nach Anspruch 20, **dadurch gekennzeichnet, dass** der Sicherheitssensor ein Distanzsensor ist.

22. Sicherheitssystem (1) nach Anspruch 21, **dadurch gekennzeichnet, dass** der Sicherheitssensor eine TOF-Kamera oder ein Flächendistanzsensor ist.

23. Sicherheitssystem (1) nach einem der Ansprüche 17 oder 18, **dadurch gekennzeichnet, dass** der Sicherheitssensor ein stereoskopischer oder mustererkennender Kamerasensor ist.

24. Sicherheitssystem (1) nach einem der Ansprüche 1 - 23, **dadurch gekennzeichnet, dass** dieses ein Schaltgerät ist.

25. Sicherheitssystem (1) nach einem der Ansprüche 1 - 24, **dadurch gekennzeichnet, dass** das oder jedes Schaltelement (8) einen Transistor aufweist.

26. Sicherheitssystem (1) nach einem der Ansprüche 1 - 25, **dadurch gekennzeichnet, dass** das oder jedes Entkopplungselement (11) eine Diode, ein Transistor, ein Widerstand, eine Induktivität oder eine Kombination hiervon ist.

27. Sicherheitssystem (1) nach einem der Ansprüche 1 - 26, **dadurch gekennzeichnet, dass** der oder jeder Pegelwandler (7, 7a, 12, 12a) von einem ohmschen Spannungsteiler oder von einer Kombination einer Konstantstromquelle mit einem Widerstand gebildet ist.
